# EUROPEAN PATENT SPECIFICATION

(11) **EP 0 536 466 B1**
(45) Date of publication and mention of the grant of the patent: **10.01.1996**
(21) Application number: 92107224.5
(22) Date of filing: 28.04.1992
(51) Int. Cl.: C01B 25/238

(54) **Process for the removal of cadmium from solutions of phosphoric acid**
Verfahren zur Entfernung von Kadmium aus Phosphorsäurelösungen
Procédé d'élimination du cadmium de solutions d'acide phosphorique

(30) Priority: 11.10.1991 IT MI912704
(43) Date of publication of application: 14.04.1993
(73) Proprietor: AGRICOLTURA S.p.A., I-90139 Palermo (IT)
(72) Inventor: Calicchio, Gaetano, I-26010 Chieve (Cremona) (IT); Bassan, Fabio, Dr., I-35100 Padova (IT); Megumi Ito, Norma, I-30175 Marghera (Venezia) (IT)
(74) Representative: Weinhold, Peter, Dr.

(56) References cited:
- EP-A- 0 244 021
- US-A- 3 306 702

## Description

The present invention relates to a process for the removal of cadmium from phosphoric acid solutions, e.g. those deriving from the sulphuric and/or nitric acid digestion of phosphatic rocks, a process which comprises eluting the phosphoric acid to which bromide ions and condensed polyphosphatic compounds have been added on at least two beds of ion-exchange resin.

It is well-known that cadmium is contained in phosphorites in quantities of from 2 to 100 ppm, depending on the origin of the phosphatic rocks. Most of this element passes into the phosphoric acid solution during the production process of phosphoric acid, whereas a small amount remains in the chalk to be disposed of and consequently is not present in the final products.

The cadmium present in phosphoric acid is found in fertilizers, in water-soluble form and in quantities strictly dependent on the percentage of P₂O₅ present.

The sometimes massive use of phosphate fertilizers in agriculture can lead to a considerable accumulation of cadmium in the soil and, through plants which are responsible for its introduction into the food chain, to a consequent accumulation in the liver and kidneys, thereby posing a great risk to human health.

Many methods have been proposed for reducing the amount of cadmium, based, for example, on a pretreatment of the starting phosphatic rocks, or on complicated methods of predigestion of these, most of these methods, however, being directed towards treatment of the phosphoric acid solutions.

Almost all of these processes for removing cadmium from phosphoric acid solutions use the technique of liquid-liquid extraction with selective organic reagents such as amines having a high molecular weight, sulphides or thiophosphoric esters.

These techniques, which generally recover the cadmium from the acid at 28-30% of P₂O₅, pose considerable operating problems, not only due to the small quantities of cadmium to be extracted with respect to the volumes of acid involved, but also because of the complexity of the acid mixture to be treated, which is due to the presence of organic substances, suspended solids and metallic impurities which compete with the cadmium in the extraction. In addition, these methods cannot always be applied at higher concentrations (40-60%) of P₂O₅ such as those which are normally used in the fertilizer industry.

It is also known that cadmium can be extracted from relatively concentrated solutions of phosphoric acid by the addition of halide ions and the use of ion-exchange resins as extraction medium: see, for example, DE-A-33 27 394, JP-A-88/035645 and EP-A-244 021.

The latter, in particular, describes the use of an anionic resin through which a stream of phosphoric acid polluted by cadmium is passed, to which halide ions are added in quantities ranging from 100-6000 ppm in the presence of a gaseous stream of nitrogen or of a metal to provide a reducing environment.

Said process is carried out in a single stage and can also include the removal of excess halide ions by using a resin which is similar to that used for the removal of the cadmium. The resin thus charged may in its turn be used for removing the cadmium from other phosphoric solutions.

However, the use of halide ions alone, which seem to have the function of forming complex ions [CdX₄]⁼ with a high affinity for the resin, causes a rapid saturation of the active centres of the resin because of the metals competing with the cadmium and a certain difficulty in regenerating the exhausted resin, due to the difficulties in stripping the cadmium when using eluent solutions normally used in these cases.

It has now been found that it is possible to remove cadmium from solutions of phosphoric acid obtained by treatment of phosphatic rocks by elution of these solutions on ion-exchange resins, without any of the above operating drawbacks. Moreover, the exhausted resin can easily be regenerated by using conventional methods.

The essential features of the invention are the subject-matter of independant claim 1; preferred features are the subject-matter of dependant claims 2-7.

The present invention, therefore, provides a process for the removal of cadmium from (solutions of) phosphoric acid obtained from phosphatic rocks which comprises an elution of said phosphoric acid on at least two ion-exchange resin beds, following a preliminary addition of bromide ions, preferably in the form of hydrogen bromide and/or the bromides of alkali metals, and of at least one condensed polyphosphatic compound which is capable of complexing the metals competing with the cadmium, thereby limiting, to a large extent, their absorption by the resin.

More specifically, the process of the present invention allows the removal of cadmium from solutions of phosphoric acid obtained by the (preferably sulphuric and/or nitric) acid digestion of phosphatic rocks and comprises the initial addition of bromide ions and at least one polyphosphatic compound to these solutions and the subsequent passing of the resulting solutions over at least two ion-exchange resin beds with a styrene-divinylbenzene matrix.

Compared to the known processes, such as those previously mentioned with reference to the known art, the process of the present invention also has the following advantages:
- cadmium removal of above 90%;
- no loss of P₂O₅;
- all the effluents of the process can be recycled to the production plant of phosphoric acid;
- satisfactory recovery of the chemicals added;
- simple operation;
- effectiveness at any concentration of phosphoric acid;
- few reagents used;
- no pretreatment of the acid to eliminate the suspended solids;
- no use of reducing substances;
- high selectivity with respect to the cadmium;
- cost compatible with the fertilizer industry.

In detail, the process of the present invention includes the following basic steps:
(i) addition to the solution of phosphoric acid, obtained from the treatment of phosphatic rocks, of bromide ions in a quantity resulting in from 100 to 3500 ppm (e.g. 500 to 2000 ppm) thereof, preferably in the form of hydrogen bromide and/or the bro-mides of alkali metals (e.g. NaBr, KBr, LiBr), and at least one condensed polyphosphatic compound in a concentration of from 1 to 5% by weight (e.g. 2 to 4% by weight);
(ii) elution of the mixture thus obtained on at least two ion-exchange resin beds with a styrene-divinylbenzene matrix, at a temperature ranging from 15 to 50°C (e.g. 25 to 40°C).

The condensed polyphosphatic compound is preferably selected from the derivative known as 10.34.0, i.e., a fertilizer containing 10 % N, 34 % P₂O₅ and 0 % K₂O, sodium hexametaphosphate and superphosphoric acid.

In case (only) two resin beds are used, the first bed is preferably composed of mixed resin containing at least 30% by volume of a chelating-type resin (e.g. the one called "CHELEX® 20", produced by Dow Chemical) with a styrene-divinylbenzene matrix having functional imine-diacetic groups, the remainder being composed of a weak anionic resin (such as AMBERLITE® IRA-93, produced by Rohm and Haas), with a styrene-divinylbenzene matrix having functional groups composed of tertiary amines.

Both resins preferably contain high percentages of divinylbenzene since this affords better physical and chemical resistance, thereby requiring only a limited annual make-up even though the operating conditions are particularly severe.

The second bed is preferably composed of a single weak anionic resin (e.g. AMBERLITE® IRA-93).

Operating with a bed of mixed resin allows the double effect, obtained in a single solution, of cadmium removal and recovery of part of the bromide.

It is convenient to use, however, in series with the first bed, a second bed of a weak anionic resin, so as to obtain a maximum recovery of the bromide ions and to be able to recycle at least 85% of the corresponding chemical.

The addition of a polyphosphate to the phosphoric acid increases the absorption capacity of the chelating-type resin (e.g. "Chelex® 20") for the cadmium and decreases the content of polluting metallic substances in the regeneration fluids, allowing the recovery of the cadmium from these solutions in a sufficiently pure saline form.

For the bed of mixed resin, the regeneration means comprise two elution streams: water, for the recovery of the cadmium and bromide which competes with it, and an aqueous ammonia solution, having a concentration of preferably 5 to 10% by weight, which, apart from supplying the OH ions required by the chelating-type resin for optimum operation thereof, also allows the recovery of the rest of the bromide ions.

For the bed of weak anionic resin, the regenerating solution comprises the above aqueous ammonia solution only.

The cadmium may be precipitated from the aqueous regenerating solution of the mixed (first) bed in the form of sulphide by adding H₂S and/or (NH₄)₂S and/or Na₂S; the sulphides of other metals such as zinc, aluminium, iron etc., precipitate together with that of the cadmium.

The excess H₂S may be recovered from the aqueous solution by stripping with steam, whereas the liquid containing P₂O₅ and bromides may be recycled, together with the regenerating aqueous ammonia solutions of the two resin beds (which also contain P₂O₅ and bromides), to the production plant of phosphoric acid.

### EXAMPLE

Phosphoric acid (42% b.w. of P₂O₅), having a cadmium content of 52 ppm, to which had been added (a) KBr in such quantities as to obtain a concentration of 800 ppm and (b) 1% by weight of 10.34.0, was eluted, at a temperature of 50°C and at a space velocity of 5 BV/h, on a bed of mixed resin composed of 30% by volume of CHELEX® 20 and 70% by volume of AMBERLITE® IRA-93.

At the outlet, the acid contained 5 ppm of cadmium and 348 ppm of bromine after an elution equal to 20 BV.

Said acid was subsequently eluted on a column of weak anionic resin at the same rate, temperature and quantity, thereby obtaining an acid having a cadmium content of 2 ppm and a bromine content of 80 ppm.

After said operation the regeneration of the two resin beds was initiated.

For the mixed resin, elution was first carried out with 5 BV of H₂O at room temperature and at a rate of 2.5 BV/h, thereby obtaining a solution containing 14% of P₂O₅, 300 ppm of Cd and 190 ppm of bromine. This solution was brought to pH 0.3 with gaseous NH₃ and subsequently the Cd was precipitated and separated as CdS by adding Na₂S.

The residual solution was recycled to the production plant of phosphoric acid together with the subsequent washing solution of the column, carried out with 3 BV of a 10% by weight NH₃ solution to recover all the immobilized bromide. This solution contained, at the outlet of the column, 2200 ppm of bromine and less than 5 ppm of cadmium.

For the weak anionic resin, elution was carried out with 3 BV of a 10% by weight aqueous solution of NH₃, at room temperature and at a spacial rate of 2.5 BV/h.

At the outlet, a solution containing 14% of P₂O₅, 2200 ppm of bromine and 10 ppm of cadmium was obtained.

This solution was also recycled to the production plant of phosphoric acid.

## Claims

1. Process for the removal of cadmium from phosphoric acid deriving from the acid digestion of phosphatic rocks, comprising the following basic steps:
(i) addition to the phosphoric acid solution of (a) bromide ions, in quantities resulting in a concentration of from 100 to 3500 ppm, and (b) at least one condensed polyphosphatic compound, in an amount of from 1 to 5% by weight;
(ii) elution of the mixture thus obtained on at least two ion-exchange resin beds with a styrene-divinylbenzene matrix, at a temperature ranging from 15 to 50°C.

2. Process according to claim 1, wherein the condensed polyphosphatic compound is selected from a fertilizer known as 10.34.0 containing 10% N, 34% P₂O₅ and 0% K₂O, sodium hexametaphosphate, superphosphoric acid and mixtures thereof.

3. Process according to any one of claims 1 and 2 wherein the bromide ions are added in the form of hydrogen bromide and/or alkali metal bromides, particularly NaBr and/or KBr.

4. Process according to any one of claims 1 to 3, wherein the phosphoric acid derives from the sulphuric and/or nitric acid digestion of phosphatic rocks.

5. Process according to any one of claims 1 to 4, wherein two resin beds are employed in step (ii).

6. Process according to claim 5, wherein the first resin bed is a mixed resin bed composed of a chelating type resin and a weak anionic resin.

7. Process according to any one of claims 5 and 6, wherein the second resin bed is composed of a weak anionic resin, preferably the same as that used in the first resin bed.

## Patentansprüche

1. Verfahren zur Entfernung von Cadmium aus Phosphorsäure, welche aus einem Säure-Aufschluß von Phosphaterz stammt, umfassend die folgenden grundlegenden Schritte:
(i) Zugabe von (a) Bromid-Ionen in Mengen, die eine Konzentration von 100 bis 3500 ppm ergeben, und von (b) mindestens einer kondensierten Polyphosphat-Verbindung in einer Menge von 1 bis 5 Gew.-% zu der Phosphorsäurelösung;
(ii) Elution der so erhaltenen Mischung auf mindestens zwei Ionenaustauscherharz-Betten mit einer Styrol-Divinylbenzol-Matrix bei einer Temperatur im Bereich von 15 bis 50°C.

2. Verfahren gemäß Anspruch 1, wobei die kondensierte Polyphosphat-Verbindung ausgewählt ist aus einem Düngemittel, welches unter der Bezeichnung 10.34.0 bekannt ist und 10% N, 34% P₂O₅ und 0% K₂O enthält, sowie Natriumhexametaphosphat, Superphosphorsäure und Mischungen davon.

3. Verfahren gemäß irgendeinem der Ansprüche 1 und 2, wobei die Bromid-Ionen in Form von Bromwasserstoff und/oder Alkalimetallbromiden, insbesondere NaBr und/oder KBr, zugegeben werden.

4. Verfahren gemäß irgendeinem der Ansprüche 1 bis 3, wobei die Phosphorsäure aus einem Schwefelsäure- und/oder Salpetersäure-Aufschluß von Phosphaterz stammt.

5. Verfahren gemäß irgendeinem der Ansprüche 1 bis 4, wobei beim Schritt (ii) zwei Harz-Betten verwendet werden.

6. Verfahren gemäß Anspruch 5, wobei das erste Harz-Bett ein gemischtes Harz-Bett ist, welches aus einem chelatbildenden Harz und einem schwach anionischen Harz zusammengesetzt ist.

7. Verfahren gemäß irgendeinem der Ansprüche 5 und 6, wobei das zweite Harz-Bett aus einem schwach anionischen Harz besteht, vorzugsweise aus demselben Harz, welches im ersten Harz-Bett verwendet wird.

## Revendications

1. Procédé d'élimination du cadmium d'acide phosphorique obtenu par la digestion acide de roches phosphatées, comprenant les étapes de base suivantes:
(i) adition à la solution d'acide phosphorique (a) d'ions bromure, en une quantité suffisantes pour obtenir une concentration allant de 100 à 3500 ppm, et (b) au moins un composé polyphosphate condensé, en une quantité allant de 1 à 5 % en poids;
(ii) élution du mélange ainsi obtenu sur au moins deux lits de résine échangeuse d'ions avec une matrice styrène-divinylbenzène, à une température allant de 15 à 50°C.

2. Procédé selon la revendication 1, dans lequel le composé polyphosphate condensé est choisi parmi un engrais connu en tant que 10.34.0 contenant 10 % de N, 34 % de P₂O₅ et 0 % de K₂O, de l'hexamétaphosphate de sodium, de l'acide superphosphorique et leurs mélanges.

3. Procédé selon la revendication 1 ou 2, dans lequel on ajoute des ions bromure sous forme d'acide bromhydrique et/ou de bromure de métal alcalin et en particulier sous forme de NaBr et/ou KBr.

4. Procédé selon l'une quelconque des revendications 1 à 3, dans lequel l'acide phosphorique dérive de la digestion d'acide sulfurique et/ou nitrique de roches phosphatées.

5. Procédé selon l'une quelconque des revendications 1 à 4, dans lequel deux lits de résine sont utilisés dans l'étape (ii).

6. Procédé selon la revendication 5, dans lequel le premier lit de résine est un lit de résine mixte composé d'une résine de type chélatant et d'une résine anionique faible.

7. Procédé selon la revendication 5 ou 6, dans lequel le second lit de résine est composé d'une résine anionique faible, de préférence la même que la résine utilisée dans le premier lit de résine.
